# EUROPEAN PATENT APPLICATION

(11) **EP 2 348 499 A1**
(43) Date of publication of application: **27.07.2011**
(21) Application number: 08877255.3
(22) Date of filing: 07.10.2008
(51) Int. Cl.: G09C 1/00

(54) **ENCRYPTING APPARATUS**

(71) Applicant: Fujitsu Limited, Kawasaki-shi, Kanagawa 211-8588 (JP); Fujitsu Semiconductor Limited, Kohoku-ku, Yokohama-shi Kanagawa 222-0033 (JP)
(72) Inventor: YAMAMOTO, Dai, Kawasaki-shi Kanagawa 211-8588 (JP); ITOH, Kouichi, Kawasaki-shi Kanagawa 211-8588 (JP); ISOBE, Masayoshi, Kanagawa 222-0033 (JP); OKADA, Souichi, Kanagawa 222-0033 (JP)
(74) Representative: Holz, Ulrike
(86) International application number: PCT/JP2008/068217
(87) International publication number: WO 2010/041307

(57) **Abstract**

An encrypting apparatus includes a digest part using a SHA-2 algorithm of which a basic unit of operation is 32*Y (Y=1 or 2) bits. The digest part includes a shift register including a series of registers, and a predetermined number of adders performing an addition operation based on data stored in the shift register. The shift register includes a (32*Y)/X-bit register, where X=2^{k} (k is an integer such that 1≤k≤4 when Y=1 and 1≤k≤5 when Y=2). Each of the adders has a data width of (32*Y)/X bits and performs the addition operation in each cycle in which the data stored in the shift register is shifted between the registers with the data width of (32*Y)/X bits.

## Description

### TECHNICAL FIELD

The present invention relates to encrypting apparatuses using an SHA-2 algorithm and including a digest part having a shift register and a predetermined number of adders, the shift register including a series of registers, the adders performing an addition operation based on data stored in the shift register.

### BACKGROUND ART

As a core security system technology, encryption may be used. Encryption may involve a hash function for compressing an arbitrary length of data into a certain length of data. Hash function technology may be used for digital signature, which is an indispensable component of today's information security systems.

Various hash function algorithms are known, such as MD4, MD5, Whirlpool, and SHA-2. These hash function algorithms may be implemented by either software or hardware. Generally, hash function processing may be performed with higher process efficiency per circuit size by hardware implementation than by software implementation. Compared to software, the circuit size may directly impact the manufacturing cost in the case of hardware. Thus, from the industrial point of view, it is important to minimize the circuit size in order to minimize cost when implementing a hash function by hardware.

In the following, SHA-2 is described as an example of a general hash function algorithm. "SHA-2" is a general term referring to four hash function algorithms SHA-224, SHA-256, SHA-384, and SHA-512. The four hash function algorithms are described in the FIPS 180-2, SECURE HASH STANDARD CHANGE NOTICE 1 published by the National Institute of Standards and Technology (NIST). The four hash functions may be similar in the overall flow of the algorithm but differ to some extent in their data widths, for example.

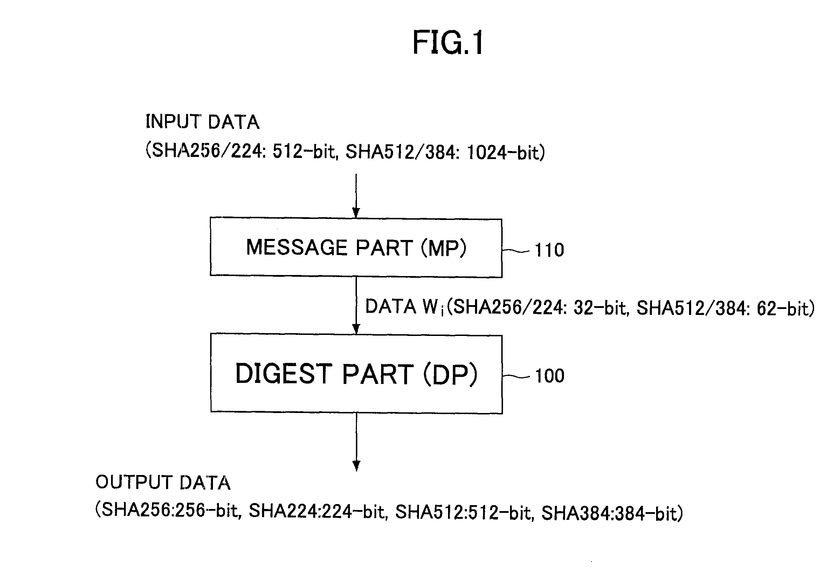

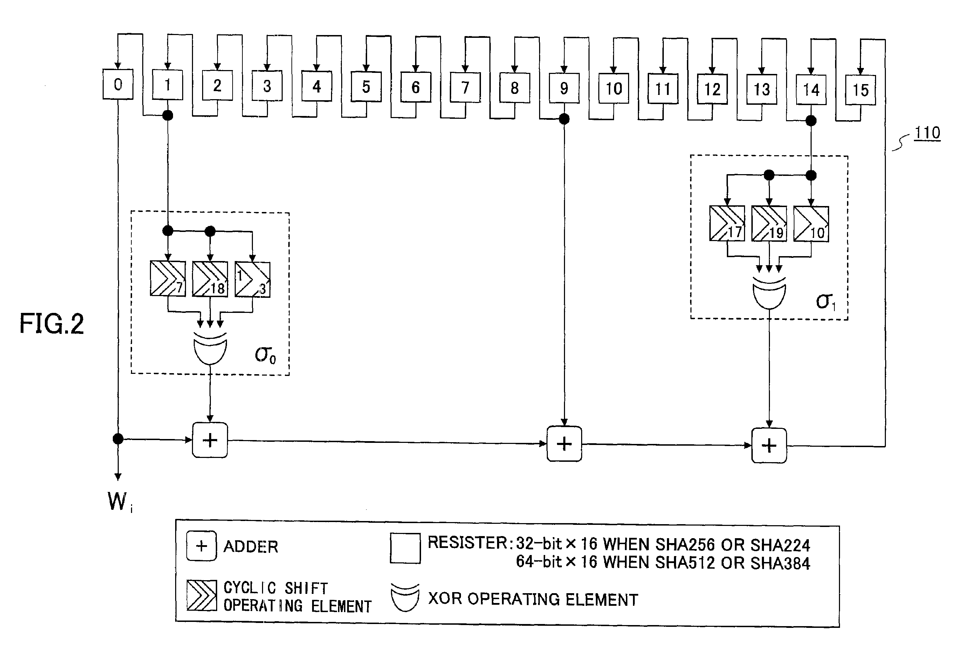

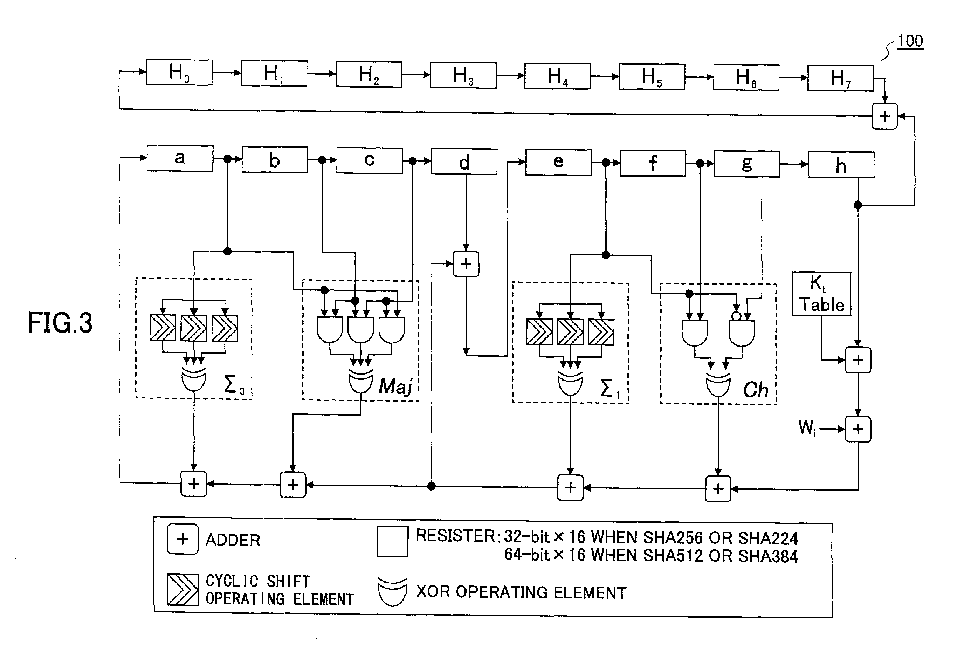

FIG. 1 illustrates a basic structure of the SHA-2 algorithm. As illustrated, SHA-2 includes a digest part ("DP") 100 and a message part ("MP") 110. Typical circuit configurations of the MP 110 and the DP 100 are illustrated in FIGs. 2 and 3, respectively. It will be seen from these figures that both the MP 110 and the DP 100 are mostly composed of registers and various operating elements.

In the case of SHA-256 or SHA-224, the MP 110 includes sixteen 32-bit registers for storing 512 bits of input data. During 64 cycles, the MP 110 keeps outputting data Wi to the DP 100. On the other hand, the DP 100 includes two groups of eight 32-bit registers. During the 64 cycles in which the DP 110 receives the data Wi from the MP 110, the DP 110 keeps updating eight 32-bit registers a through h in the first group using a shift register structure. Thus, the DP 100 and the MP 110 perform parallel operations synchronized by the data Wi. 64 cycles after receiving the initial data Wi, the DP 100 performs a terminating process over 8 cycles. Specifically, the DP 100 updates the values of the eight 32-bit registers H₀ though H₇ of the second group using the first group of registers a through h. In SHA-256, 256 bits of data stored in the registers H₀ through H₇ of the second group provide a final output (hash value). In SHA-224, 224 bits of data stored in the register H₀ through H₆ of the second group provide a hash value.

On the other hand, in the case of SHA-512 or SHA-384, the main loop has 80 cycles instead of 64 cycles, and the unit of operation is 64 bits and not 32 bits. In other respects, SHA-512 or SHA-384 may be similar to SHA-256 or SHA-224. In SHA-512, 512 bits of data stored in the registers H₀ through H₇ of the second group provide a hash value. In SHA-384, 384 bits of data stored in the registers H₀ through H₅ of the second group provide a hash value.

As mentioned above, hardware implementation of encryption technology including a hash function is associated with the issue of how to decrease circuit size in order to reduce cost. In the case of SHA-2, which is an example of a hash function, the DP 100 occupies a greater area of the overall hardware circuit size than the MP 110 on account of the specification of the DP 100. Thus, in order to reduce circuit size in hardware implementation, it may be appropriate to reduce the circuit size of the DP 100.

As illustrated in FIG. 3, the DP 100 includes a register unit having plural registers for storing data, and an operating unit having various operating elements, such as adders. It is difficult to eliminate the register unit due to the specification of the SHA-2 algorithm described above. Thus, when attempts are made to reduce the circuit size of the DP 100, one approach may involve reducing the circuit size of the operating unit. Generally, adder reduction may be achieved by time division or bit division. Adder reduction by time division involves reducing the number of adders (see Patent Document 1, for example). For example, an operation that used to be performed by two 32-bit adders in one cycle may be performed by one 32-bit adder in two cycles. On the other hand, adder reduction by bit division involves decreasing the data width of the adder. For example, an operation that used to be performed by two 32-bit adders in one cycle may be performed by two 16-bit adders in two cycles.

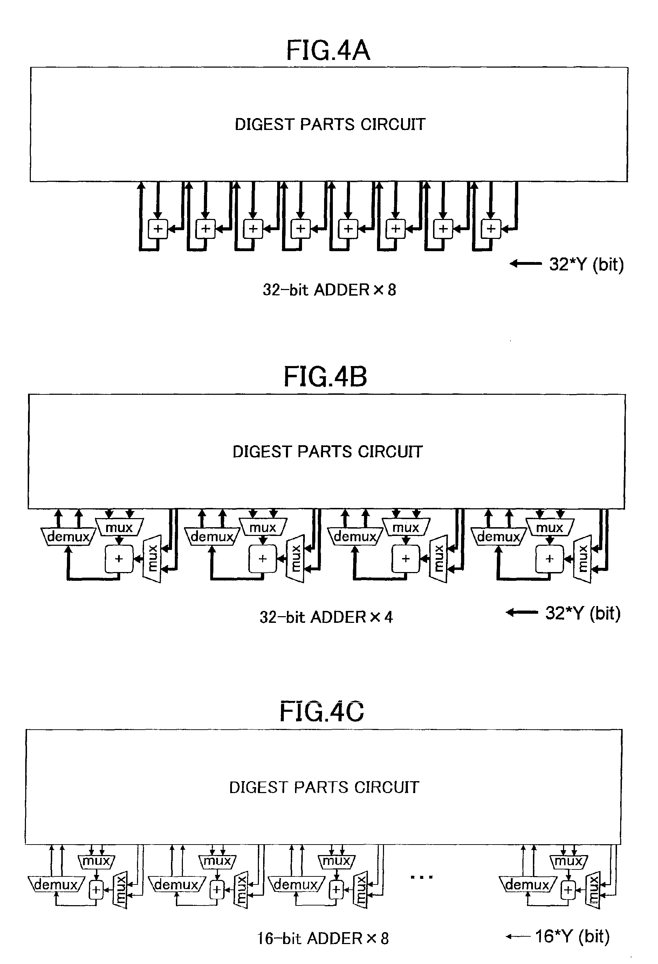

FIGs. 4A, 4B, and 4C illustrate examples of circuit configurations peripheral to the adders of the DP 100 in accordance with the aforementioned various approaches for reducing circuit size by adder reduction. FIG. 4A illustrates a circuit configuration in accordance with the SHA-2 algorithm specification. FIG. 4B illustrates a circuit configuration in accordance with the adder reduction approach by time division. FIG. 4C illustrates a circuit configuration in accordance with the adder reduction approach by bit division.

As illustrated in FIG. 4A, in the circuit configuration in accordance with the SHA-2 algorithm specification, an addition operation is performed in one cycle by eight 32*Y-bit adders (Y=1 when SHA-224/256 and Y=2 when SHA-384/512). On the other hand, in the adder reduction approach by time division, as illustrated in FIG. 4B, the same addition operation is performed in two cycles, thus reducing the number of adders in half. In the case of the adder reduction approach by bit division, as illustrated in FIG. 4C, 32*Y-bit addition data is divided into upper 16*Y bits and lower 16*Y bits. In the first cycle, a lower bit addition operation is performed. In the second cycle, an upper bit addition operation is performed. In this way, data width can be reduced in half.
Patent Document 1: Japanese Laid-open Patent Publication No. 2001-282106

### DISCLOSURE OF INVENTION

### PROBLEM TO BE SOLVED BY THE INVENTION

However, in the case of the adder reduction approach by time division, because the adders are shared between different cycles, a selector may need to be provided at the input and output of the adders. In the case of the adder reduction approach by bit division, the adders are also shared between different cycles, so that a selector may need to be provided at the input and output of the adders. Thus, the conventional approaches for reducing circuit size in SHA-2 hardware lead to an increase in circuit size due to the selector. As a result, no decrease in circuit size can be realized in the SHA-2 hardware as a whole.

In view of the above, it is an object of the present invention to provide an encrypting apparatus capable of reducing circuit size of an overall hardware implementation of SHA-2, which is a hash function.

### MEANS OF SOLVING THE PROBLEM

According to an aspect of the invention, an encrypting apparatus includes a digest part using a SHA-2 algorithm of which a basic unit of operation is 32*Y (Y=1 or 2) bits. The digest part includes a shift register including a series of registers, and a predetermined number of adders performing an addition operation based on data stored in the shift register. The shift register includes a (32*Y)/X-bit register, where X=2^{k} (k is an integer such that 1≤k≤4 when Y=1 and 1≤k≤5 when Y=2). Each of the adders has a data width of (32*Y)/X bits and performs the addition operation in each cycle in which the data stored in the shift register is shifted between the registers with the data width of (32*Y)/X bits.

As described with reference to FIGs. 1 through 4, in an encrypting apparatus using the SHA-2 algorithm, the digest part occupies a larger proportion of the circuit size of an apparatus than the message part. Thus, the present invention is directed to the reduction of circuit size of the digest part. The basic unit of operation of the digest part of SHA-2 algorithm is (32*Y) bits. Focusing on the shift register of the digest part, the encrypting apparatus according to an embodiment of the present invention uses (32*Y)/X bit registers in the shift register. In this way, the data width of the adders used in the digest part can be made one-Xth that of conventional examples without providing an extra selector.

### EFFECTS OF THE INVENTION

In accordance with the encrypting apparatus of an embodiment, the circuit size of an overall hardware implementation of the SHA-2 hash function can be reduced.

### BRIEF DESCRIPTION OF THE DRAWINGS

FIG. 1 illustrates a basic configuration of a SHA-2 algorithm;
FIG. 2 illustrates a conventional circuit configuration of a message part (MP) according to SHA-2;
FIG. 3 illustrates a conventional circuit configuration of a digest part (DP) according to SHA-2;
FIGs. 4A, 4B, and 4C illustrate various circuit configurations peripheral to adders of the DP according to various circuit size reducing approaches;
FIG. 5 illustrates a circuit configuration of a DP according to SHA-2 according to an embodiment of the present invention;
FIGs. 6A and 6B illustrate peripheral circuits of adders according to a conventional example and the present embodiment, respectively;
FIG. 7 illustrates a first configuration of a ∑₀ peripheral circuit of FIG. 5;
FIG. 8 illustrates a second example of the ∑₀ peripheral circuit of FIG. 5;
FIG. 9 illustrates a configuration of a shift register for the X-cycle process;
FIGs. 10A and 10B illustrate configurations of the ∑₀ peripheral circuit for the X-cycle process;
FIGs. 11A and 11B illustrate data input/output configurations of a peripheral circuit of the ∑₀ circuit of FIG. 10;
FIG. 12 illustrates a configuration of a Maj circuit for the X-cycle process; and
FIG. 13 illustrates a configuration of a Ch circuit for the X-cycle process.

### EXPLANATION OF REFERENCE NUMERALS

- 10, 100: Digest part
- 110: Message part
- 20: Register unit
- 30: Operating unit
- 40: Shift register
- a-h: Register
- A11-A18: Adder
- C11: ∑0 circuit
- C12: Maj circuit
- C13: ∑1 circuit
- C14: Ch circuit
- S11-S14, S21, S22: Interface unit

### BEST MODE OF CARRYING OUT THE INVENTION

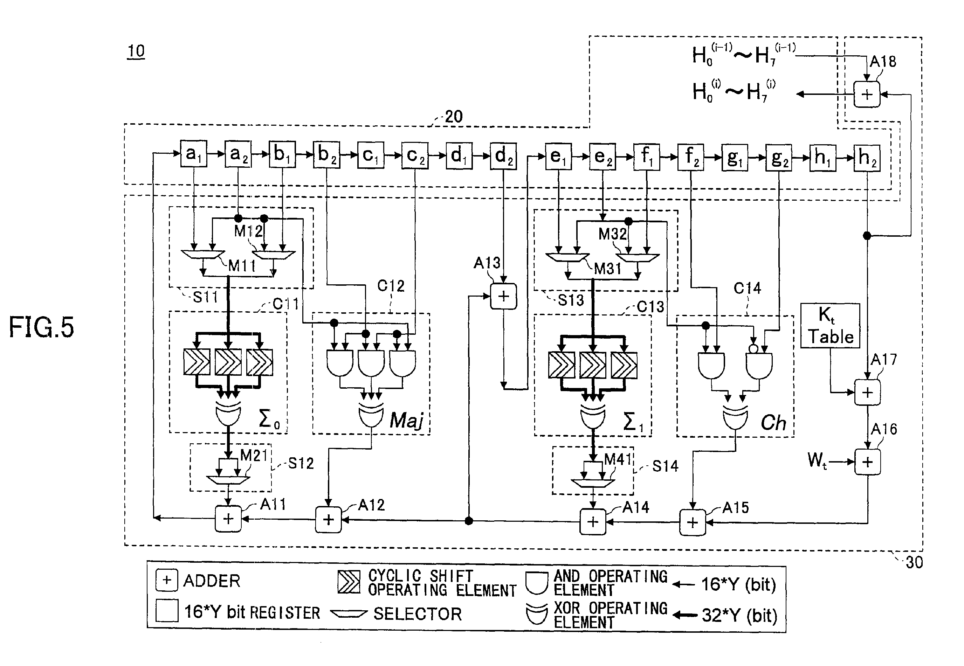

Embodiments of the present invention are described in the following with reference to the drawings. FIG. 5 is a block diagram of a circuit configuration of a DP (digest part) 10 of SHA-2 according to an embodiment. The DP 10 includes a register unit 20 and an operating unit 30. The register unit 20 includes a group of 16 16*Y-bit registers a₁, a₂; b₁,...,h₂. Using this group of registers, the DP 10 updates the values of H₀ through H₇ in which a final output (hash value) is stored. Specifically, the values are updated in accordance with H₀←H₀+{a₁∥a₂} , H₁←H₁+{b₁∥b₂},..., H₇←H₇+{h₁∥h₂} , where Y is "1" in the case of SHA-224/256 and "2" in the case of SHA-384/512. This means that the basic unit of operation of the DP of the SHA-2 algorithm is 32 bits in the case of SHA-224/256 and 64 bits in the case of SHA-384/512. The operating unit 30 further includes eight 16*Y-bit adders All through A18.

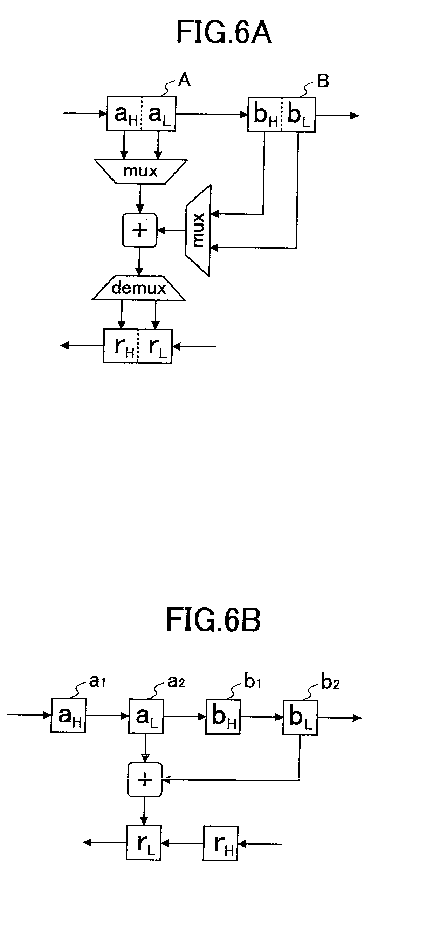

The conventional DP circuit configuration illustrated in FIG. 3 includes the group of eight 32*Y-bit registers a through h. In contrast, the DP circuit configuration according to the present embodiment has a 16*Y-bit shift register structure including the group of 16 16*Y-bit registers a₁, a₂; b₁,...,h₂. This structure prevents the increase of selectors around the adders All through A18 of the DP, which has been a problem of the conventional circuit size reduction approaches. The effect provided by the 16*Y-bit shift register structure is described with reference to FIGs. 6A and 6B.

FIGs. 6A and 6B illustrate examples of a peripheral circuit of an adder according to a conventional example and the present embodiment, respectively. For ease of understanding of an operation of the adders A11 through A18 according to the present embodiment, only some of the registers in the shift register and only one adder contained in the operating unit are illustrated in FIGs. 6A and 6B.

FIG. 6A illustrates a circuit configuration in accordance with the conventional adder reduction approach by bit division. As illustrated, the conventional approach involves 32*Y-bit registers A and B corresponding to the two groups of 16*Y-bit registers used in the present embodiment. In this circuit configuration, a shift process is performed on a 32*Y-bit unit basis in accordance with the original specification of SHA-2 algorithm. Thus, the unit of operation is 32*Y bits, so that, in order to realize addition of 16*2 bits by bit division, the upper 16*Y bits and the lower 16*Y bits of the 32*Y-bit data need to be successively added. This may require a selector for selecting the upper bits or the lower bits.

FIG. 6B illustrates a circuit configuration according to the present embodiment. As illustrated, in the present embodiment, the shift register includes 16*Y-bit registers a₁, a₂, b₁, and b₂. The bit unit of a shift operation is also modified from the 32*Y bits in accordance with the original specification of SHA-2 algorithm to 16*Y bits. In this way, a selector function is provided by the shift operation. Thus, when the upper 16*Y bits and the lower 16*Y bits of the 32*Y-bit data are successively added, the need for a selector as required in the conventional approaches is eliminated. Thus, by using 16*Y-bit registers in the shift register, the data width of the adders used in the digest part can be reduced to 16*Y bits, which is one half that of the conventional approaches, without providing an extra selector.

Operations of the circuit configurations of FIGs. 6A and 6B are described with reference to the case where the operation involves r=a+b, where r, a, and b are variables of 32*Y bits. The upper 16*Y bits of each variable is denoted by X_{H} while its lower 16*Y bits are denoted by X_{L} (X=r, a, or b). Further, one addition operation of 16*Y-bit data is defined as one cycle.

In the conventional circuit configuration according to the bit division approach illustrated in FIG. 6A, 32*Y-bit data {a_{H}∥a_{L}} and {b_{H}∥b_{L}} are stored in each of the registers A and B. When the lower 16*Y bits of the 32*Y-bit data are operated on in the first cycle, a selector may be required for acquiring the lower bits a_{L} and b_{L} from each register and inputting them into an adder. On the other hand, in the circuit configuration of FIG. 6B according to the present embodiment, for the same operation, no selector is needed because the upper 16*Y bits and the lower 16*Y bits of each 32*Y-bit data are stored in the separate registers. In both circuit configurations, the adder performs an addition operation on the lower 16*Y bits; namely, an operation "carry∥r_{L}=a_{L}+b_{L}" is performed, where "carry" is a carry signal whose data width is one bit.

Then, in the second cycle, the upper bits of the 32*Y-bit data are operated on. In the circuit configuration of FIG. 6A in accordance with the conventional bit division approach, the upper bits a_{H} and b_{H} may be acquired from each register by the selector. On the other hand, in the circuit configuration of FIG. 6B according to the present embodiment, for the same operation, the 16*Y-bit data stored in each register is moved to the adjacent register. Namely, the upper bits are stored in the register in which the lower bits have been stored in the first cycle. At this time in both circuit configurations, the adder performs an addition operation on the upper 16*Y bits; namely, r_{H}=a_{H}+b_{H}+carry.

In the circuit configuration according to the conventional bit division approach, the operation result of the adder needs to be outputted as 32*Y-bit data because of the use of the 32*Y-bit shift register. Thus, as illustrated in FIG. 6A, a demultiplexer may be provided in an output stage of the adder. The demultiplexer may be configured to select the lower bits r_{L} in the first cycle and the upper bits r_{H} in the second cycle in the 32*Y-bit register in which the added results are stored. On the other hand, in the circuit configuration according to the present embodiment, such demultiplexer for combining the operation results of the adder is not required because of the use of the 16*Y-bit shift register.

Thus, in accordance with the present embodiment, the 16*Y-bit-width shift register structure is adopted, so that, even when the input line of the adder is fixed, data can be inputted to the adder in the order of the lower bits and then the upper bits (or vice versa) because data is shifted in each cycle. Thus, a fixed-line circuit structure that does not use a selector may be realized. In this case, the adder has a 16*Y-bit data width, and an addition operation is performed in each cycle.

Referring back to FIG. 5, the operating unit 30 includes interface units S11 through S14, a ∑₀ circuit C11, a Maj circuit C12, a ∑₁ circuit C13, and a Ch circuit C14. The ∑₀ circuit C11 and the ∑₁ circuit C13 are logic operation circuits for performing a ∑ function. Each of these logic operation circuits includes three cyclic shift operating elements that perform cyclic shift operations on data stored in some of the registers in the shift register, and an XOR operating element for performing an XOR operation on the outputs of the cyclic shift operating elements. The Maj circuit C12 is a logic operation circuit for operating a Maj function. The Maj circuit C12 includes three AND operating elements that perform AND operations on data stored in some of the registers in the shift register, and an XOR operating element that performs an XOR operation on the outputs of the AND operating elements. The Ch circuit C14 is a logic operation circuit for operating a Ch function. The Ch circuit C14 includes two AND operating elements that perform AND operations on data stored in some of the registers in the shift register, and an XOR operating element that performs an XOR operation on the outputs of the AND operating elements. The various functions are well known in the general SHA-2 algorithms and are not described in detail herein.

The circuit configuration of FIG. 5 is basically similar to the circuit configuration of the conventional DP illustrated in FIG. 3 and differs in that the interface units S11 through S14 are inserted. The adders A11 through A18, the Maj circuit C12, and the Ch circuit C14 are configured to handle the data width of 16*Y bits, which is one half the 32*Y bits. The ∑₀ circuit C11 and the ∑₁ circuit C13 each include a cyclic shift operating element for ∑ function operation. The cyclic shift operating element needs to be fed with data having a data width of 32*Y bits. Therefore, the interface units S11 and S13 are provided at the input stages of the ∑₀ circuit C11 and the ∑₁ circuit C13 in order to match the 16*Y-bit data width with the 32*Y bits. Because the data outputted by the ∑₀ circuit C11 and the ∑₁ circuit C13 have the data width of 32*Y bits, the interface units S12 and S14 are provided at the output stages of the ∑₀ circuit C11 and the ∑₁ circuit C13 in order to match the 32*Y-bit data width with the 16*Y bits.

The first interface unit S11 is provided between the register unit 20 and the ∑₀ circuit C11 in the embodiment illustrated in FIG. 5. The first interface unit S11 is configured to select two appropriate data items from the 16*Y-bit data stored in the registers a₁, a₂, and b₁ of the register unit 20, and configured to input the data items into the ∑₀ circuit C11 as 32*Y-bit data. The second interface unit S12 is provided between the ∑₀ circuit C11 and the first adder A11, which is connected to the first register a₁ of the register unit 20. The second interface unit S12 is configured to select the upper 16*Y-bit data or the lower 16*Y-bit data of the 32*Y-bit data outputted from the ∑₀ circuit C11, and input the selected data into the first adder A11. The third interface unit S13 is provided between the register unit 20 and the ∑₁ circuit C13. The third interface unit S13 is configured to select two appropriate data items from the 16*Y-bit data stored in the registers e₁, e₂, and f₁ of the register unit 20, and configured to output the selected data items to the ∑₁ circuit C13 as 32*Y-bit data. The fourth interface unit S14 is provided between the ∑₁ circuit C13 and the fourth adder A14. The fourth interface unit S14 is configured to select the upper 16*Y-bit data or the lower 16*Y-bit data of the 32*Y-bit data outputted from the ∑₁ circuit C13, and input the selected data into the fourth adder A14.

The first interface unit S11 includes two selectors M11 and M12. The first selector M11 may include a 2-input 1-output multiplexer having a first input connected to the register a₁, a second input connected to the register a₂, and an output connected to the input of the ∑₀ circuit C11. The second selector M12 has a first input connected to the register a₂, a second input connected to the register b₁, and an output connected to the input of the ∑₀ circuit C11. Thus, in this structure, the first interface unit S11 inputs the 32*Y-bit data into the ∑₀ circuit C11 in a coupling order of {upper bit∥lower bit}, both in the first and second cycles of process. The third interface unit S13 has a similar structure and operates similarly. One cycle is defined by a single addition operation on the 16*Y-bit data; namely, by the period in which the 16*Y-bit data is moved from the current register to the adjacent register in the shift register.

The ∑₀ circuit C11 performs an XOR operation after performing a cyclic shift operation on the data inputted from the first interface unit S11. Thus, the ∑₀ circuit C11, in both the first and the second cycles of the process, outputs the 32*Y-bit data in the coupling order of {upper bit∥lower bit}. The ∑₁ circuit C13 also has a similar structure and operates similarly.

The second interface unit S12 includes a selector M21. The selector M21 includes a 2-input 1-output multiplexer having two inputs connected to the output of the ∑₀ circuit C11 and an output connected to the first adder A11. When the ∑₀ circuit C11 outputs the 32*Y-bit data in the above coupling order, the selector M21 selects the lower 16*Y-bit data in the first cycle and then selects the upper 16*Y-bit data in the second cycle. The fourth interface unit S14 has a similar structure and operates similarly.

Thus, the circuit configuration of the DP of SHA-2 according to the present embodiment illustrated in FIG. 5 enables the number of operation bits of the circuit as a whole to be reduced in half compared to the conventional configurations without increasing the number of selectors around the adders A11 through A18. The halving of the operation bits also reduces the operation time in half compared to the conventional configurations, so that the operating frequency of the circuit can be doubled. Thus, the same throughput as that of the conventional configurations can be obtained even when the operation bits are reduced in half.

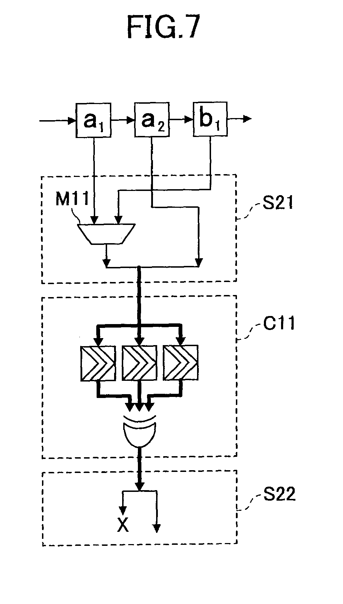

The interface units S11 through S14 of FIG. 5 may have a structure illustrated in FIG. 7. While the example of FIG. 7 illustrates only the peripheral circuit of the ∑₀ circuit C11, a peripheral circuit of the ∑₁ circuit C13 may have the same structure.

In the example of FIG. 7, the first interface unit S21 includes a single selector M11. The selector M11 includes a 2-input 1-output multiplexer having a first input connected to the register a₁, a second input connected to the register b₁, and an output connected to the input of the ∑₀ circuit C11. The selector M11 selects the 16*Y-bit data stored in the register a₁ in the first cycle and then selects the 16*Y-bit data stored in the register b₁ in the second cycle. The first interface unit S21 combines the 16*Y-bit data selected by the selector M11 with the 16*Y-bit data stored in the register a₂. The first interface unit S21 inputs the 32*Y-bit data into the ∑₀ circuit C1 in the coupling order {upper bit∥lower bit} in the first cycle and the coupling order {lower bit∥upper bit} in the second cycle.

The ∑₀ circuit C11 performs an XOR operation after performing a cyclic shift operation on the 32*Y-bit data inputted from the first interface unit S21. Thus, the ∑₀ circuit C11 outputs the 32*Y-bit data in the coupling order {upper bit∥lower bit} in the first cycle and the coupling order {lower bit∥upper bit} in the second cycle.

Because the ∑₀ circuit C11 outputs the 32*Y-bit data in the above-described coupling order, the second interface unit S22 does not require a selector. The second interface unit S22 unconditionally outputs the lower 16*Y bit of the 32*Y-bit data outputted from the ∑₀ circuit C11, so that the lower 16*Y-bit data can be acquired in the first cycle and the upper 16*Y-bit data can be acquired in the second cycle. Specifically, of the 32 data lines extending from the ∑₀ circuit C11, the data lines for transmitting the data corresponding to the lower 16*Y bits may be connected to the adder in a later stage. Thus, the need for a selector can be eliminated.

Alternatively, the first interface unit S21 may be configured to input the 32*Y-bit data into the ∑₀ circuit C11 in the coupling order of {lower bit∥upper bit} in the first cycle and in the coupling order of {upper bit∥lower bit} in the second cycle. In this case, the ∑₀ circuit C11 outputs data in the coupling order {lower bit∥upper bit} in the first cycle and in the coupling order {upper bit∥lower bit} in the second cycle. The second interface unit S22 may unconditionally output the upper 16*Y bits of the 32*Y-bit data outputted from the ∑₀ circuit C11.

The configuration of the respective interface units illustrated in FIG. 7 enables a decrease in the number of selectors used compared to that in the case of the circuit configuration illustrated in FIG. 5. As a result, the circuit size of the DP can be reduced.

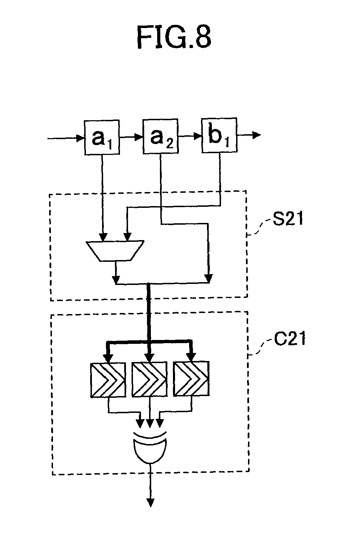

FIG. 8 illustrates a ∑₀ circuit C21 which is a variation of the peripheral circuit of the ∑₀ circuit C11 of FIG. 7. The ∑₀ circuit C21 is configured to perform an XOR operation only on the lower (or upper) 16*Y bits of the 32*Y-bit data on which a cyclic shift operation has been performed. Specifically, of the 32 data lines extending from each cyclic shift operating element, the data lines that transmit the data corresponding to the lower (or upper) 16*Y bits may be connected to the XOR operating element. In this way, the need for a second interface unit may be eliminated when the first interface unit S21 has the structure illustrated in FIG. 7. Thus, the circuit size of the DP can be reduced even further compared to the structure of FIG. 7.

In the foregoing embodiment, the data width of the adder is reduced in half (1/2) by performing the operation process that has been performed in one cycle in accordance with the SHA-2 algorithm specification in two cycles. Next, an embodiment is described in which the data width of the adder is made 1/X by performing a process that is performed in one cycle in accordance with the SHA-2 algorithm specification in X cycles, where X=2^{k} (k is an integer such that 2≤k≤4 when Y=1 and 2≤k≤5 when Y=2).

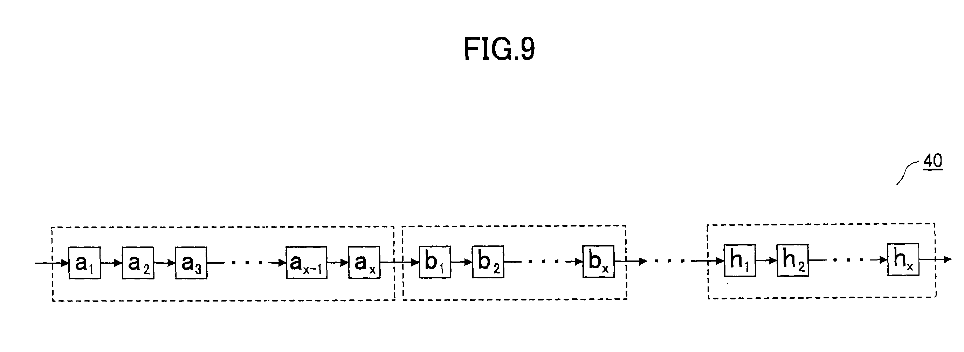

FIG. 9 illustrates a structure of a shift register 40 in the case of the X-cycle process. The shift register 40 includes a first group of registers updated by data Wi outputted from the MP. The registers include 8*X (32*Y)/X bit registers a₁,a₂,.., a_{X},b₁,...h_{X}. Specifically, the shift register 40 includes eight groups of registers a₁ through a_{X}, b₁ through b_{X},···, and h₁ through h_{X}, each group including X (32*Y)/X bit registers and handling 32*Y-bit data.

In this structure, as described with reference to FIG. 6, each of a predetermined number (which is normally eight) of adders included in the digest part can have a data width corresponding to (32*Y)/X bits. Thus, the adders can perform an addition operation on the inputted (32*Y)/X-bit data in each cycle in which the data stored in the shift register is shifted between the registers with the data width of (32*Y)/X bits.

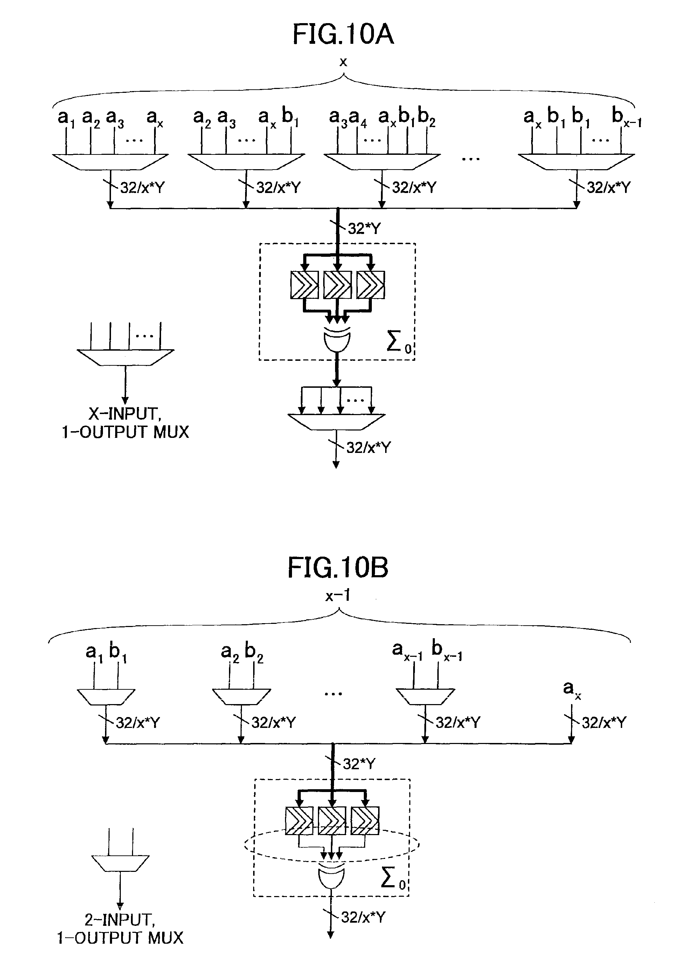

FIGs. 10A and 10B illustrate structures of peripheral circuits of the ∑₀ circuit in the case of the X-cycle process. FIG. 10A illustrates the structure in which the structure of FIG. 5 for the two-cycle process is extended to handle the X-cycle process. FIG. 10B illustrates the structure in which the structure of FIG. 8 for the two-cycle process is similarly extended to handle the X-cycle process. In the structure of FIG. 10A, the input stage of the ∑₀ circuit is provided with a number X of X-input 1-output multiplexers (MUX), and the output stage of the ∑₀ circuit is provided with one X-input 1-output MUX. On the other hand, in the structure of FIG. 10B, only the input stage of the ∑₀ circuit is provided with a number (X-1) of 2-input 1-output MUX's.

The peripheral circuit of the ∑₁ circuit may be similar to the peripheral circuit of the ∑₀ circuit illustrated in FIG. 10 with the exception that the values of the registers "e" and "f" are inputted into the multiplexer provided in the input stage of the ∑₁ circuit, instead of the values of the registers "a" and "b".

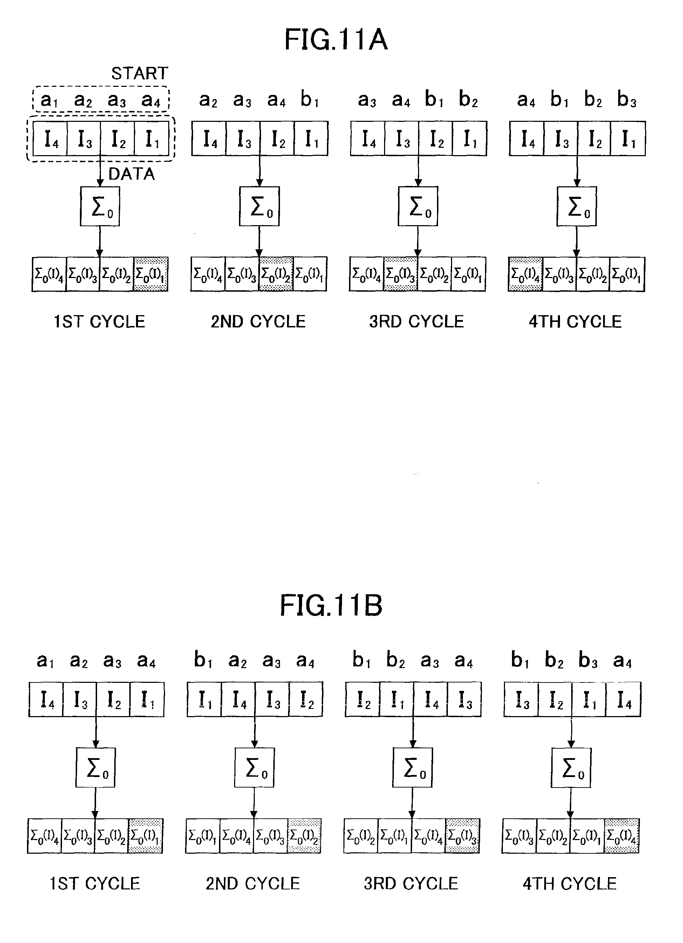

FIGs. 11A and 11B illustrate the data input/output configuration of the peripheral circuit of the ∑₀ circuit illustrated in FIGS. 10A and 10B when X=4. FIG. 11A illustrates the data input/output configuration of the peripheral circuit of the ∑₀ circuit having the structure of FIG. 10A. FIG. 11B illustrates the data input/output configuration of the peripheral circuit of the ∑₀ circuit having the structure of FIG. 10B. For example, the 32*Y-bit data inputted in the first cycle is divided into four 8*Y bit portions I₄, I₃, I₂, and I₁ from the upper bits. The registers in which this data is actually stored are designated registers a₁, a₂, a₃, a₄, b₁, b₂, b₃, and b₄. Of the data outputted from the ∑₀ circuit, the i-th 8*Y-bit data (i=1,2,3,4) from the lower bits is designated ∑₀(I)ᵢ.

In the data input/output configuration of FIG. 11A, the data I inputted into the ∑₀ circuit has a fixed coupling order of {I₄∥I₃∥I₂∥I₁} in all of the cycles. In this circuit configuration, the four registers storing the data I are shifted in each cycle to the right with respect to the registers a₁ through a₄ of the first cycle. The ∑₀ circuit performs an XOR operation after performing a cyclic shift operation on the input data I={I₄∥I₃∥I₂∥I₁}. As a result, as illustrated, the 8*Y-bit data that are to be selected from the 32*Y-bit data outputted from the ∑₀ circuit are present in different bit ranges in the output data in each cycle. Thus, in order to select the desired 8*Y-bit data, a selector (i.e., an X-input 1-output MUX) may need to be provided in the output stage of the ∑₀ circuit.

In this case, the cyclic shift may be mathematically expressed as follows:
First cycle: ∑₀ (I)₄∥∑₀(I)₃∥∑₀(I)₂∥∑₀(I)₁=∑₀(I)
Second cycle:
   ∑₀ (I)₁∥∑₀(I)₄∥∑₀(I)₃∥∑₀(I)₂=∑₀(I)>>>8*Y
Third cycle:
   ∑₀ (I)₂∥∑₀(I)₁∥∑₀(I)₄∥∑₀(I)₃=∑₀(I)>>>16*Y
Fourth cycle:
   ∑₀ (I)₃∥∑₀(I)₂∥∑₀(I)₁∥∑₀(I)₄=∑₀(I)>>>32*Y

From the above equations, it can be seen that the output data of the ∑₀ circuit needs to be cyclically shifted to the right. As a property of the ∑ function realized by the ∑₀ circuit, ∑ₓ(a)>>>b=∑ₓ(a>>>b) is known. Based on this property, in order to cyclically shift the output data of the ∑₀ circuit to the right, the input data may be cyclically shifted to the right by the same number of bits. Thus, the input data I may be inputted into the ∑₀ circuit while cyclically shifting to the right by 8*Y bits in each cycle. In this case, in the registers a₁, a₂, a₃, a₄, b₁, b₂, and b₃ in which the input data si stored, the data is shifted to the right by 8*Y bits in each cycle. By utilizing such a shift register structure, the input data I can be cyclically shifted to the right by 8*Y bits in each cycle.

FIG. 11B illustrates the process of cyclically shifting the input data I to the right by 8*Y bits in each cycle by utilizing the shift register structure, so that the desired 8*Y-bit data for the particular cycle can be outputted from the ∑₀ circuit in all of the cycles. In the data input/output process of FIG. 11B, the input data I is controlled such that the desired 8*Y-bit data may be always present in the lower 8*Y bits of the 32*Y-bit data obtained by the cyclic shift operation in the ∑₀ circuit in all of the cycles. Such a data input/output process makes it possible to reduce the number of selectors provided in the input stage of the ∑₀ circuit, as illustrated in FIG. 10B. Further, the selection of the 8*Y-bit data on the output side of the ∑₀ circuit may be realized by configuring the ∑₀ circuit such that the XOR operation is performed only on the lower 8*Y bits of the 32*Y-bit data on which the cyclic shift operation has been performed, as illustrated in FIG. 10B. Alternatively, the selection may be realized by, as illustrated in FIG. 7 with reference to the two-cycle process, providing a structure in a subsequent stage of the ∑₀ circuit which is configured to unconditionally (i.e., without using a selector) output the lower 8*Y bits of the 32*Y-bit data outputted from the ∑₀ circuit.

Thus, the circuit configuration of FIG. 10B is configured such that the lowest data of the output data provides the desired data, as illustrated in FIG. 11B. A circuit similar to the circuit of FIG. 10B may be configured such that the desired data is present in the i-th bit range from the lower bits, or in the upper 8*Y bits.

As will be seen from FIGs. 10A and 10B and FIGs. 11A and 11B, the circuit configuration of FIG. 10B has a smaller circuit size than the circuit configuration of FIG. 10A due to the smaller number of selectors used. Thus, it may be preferable to use the circuit configuration of FIG. 10B utilizing the shift register structure so that the circuit size can be reduced effectively as the number of process cycles (X) increases.

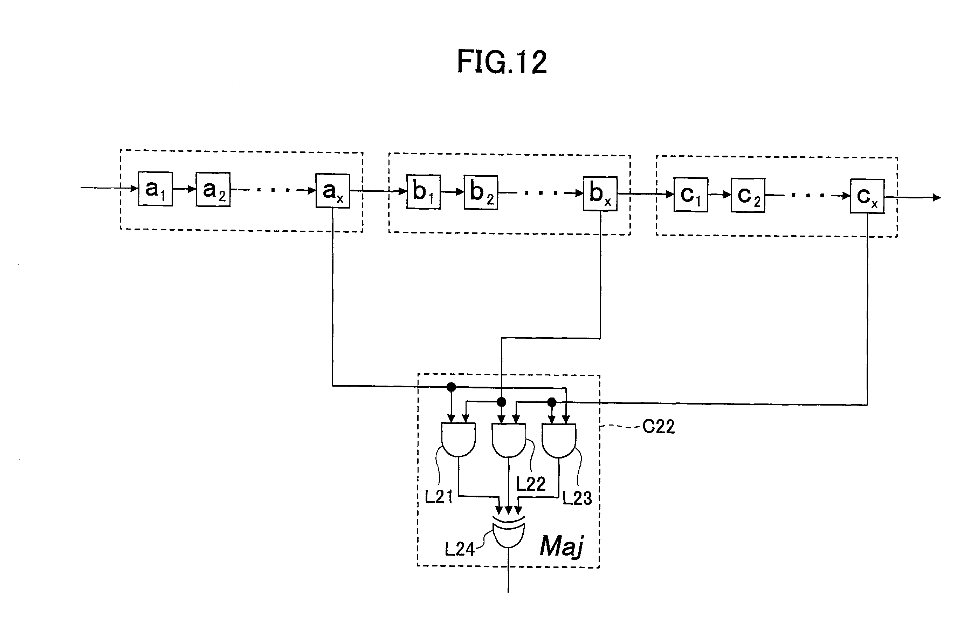

FIG. 12 illustrates a Maj circuit C22 in the case of the X-cycle process. The Maj circuit C22 includes three AND operating elements L21, L22, and L23 and an XOR operating element L24. The first AND operating element L21 has two inputs connected to the last registers a_{X} and b_{X} of the first and the second groups of registers, respectively, from the top, and an output connected to one of the inputs of the XOR operating element L24. The second AND operating element L22 has two inputs connected to the last registers b_{X} and c_{X} of the second and the third groups of registers, respectively, from the top, and an output connected to one of the inputs of the XOR operating element L24. The third AND operating element L23 has two inputs connected to the last registers a_{X} and c_{X} of the first and the third groups of registers, respectively, from the top, and an output connected to one of the inputs of the XOR operating element L24. The output of the XOR operating element L24 is connected to one of the adders (not illustrated). Thus, the Maj circuit C22 may be basically similar to conventional examples; however, the use of the shift register illustrated in FIG. 9 in the DP enables the handling of the bit width (32*Y)/X. As a result, the circuit size can be reduced.

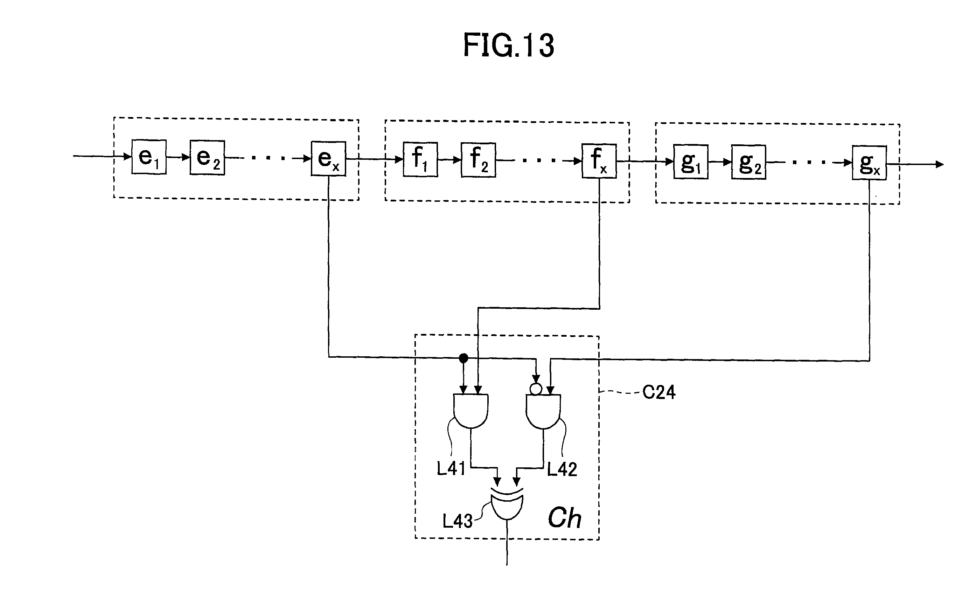

FIG. 13 illustrates a Ch circuit C24 in the case of the X-cycle process. The Ch circuit C24 includes two AND operating elements L41 and L42 and an XOR operating element L43. The first AND operating element L41 has two inputs connected to the last registers e_{X} and f_{X} of the fifth and the sixth groups of registers, respectively, from the top, and an output connected to one of the inputs of the XOR operating element L43. The second AND operating element L42 has a first input to which the data stored in the last register e_{X} of the fifth group of registers is inputted after inversion, and a second input connected to the last register g_{X} of the seventh group of registers. The second AND operating element L42 has an output connected to one of the inputs of the XOR operating element L43. The output of the XOR operating element L43 is connected to one of the adders (not illustrated). Thus, the Ch circuit C24 may be basically similar in structure to conventional examples. However, the handled bit width is (32*Y)/X due to the use of the shift register illustrated in FIG. 9 in the DP. As a result, the circuit size can be reduced compared to conventional examples.

It is to be understood that the above-described embodiments are merely illustrative of some of the many specific embodiments that represent applications of the principles of the present invention. Clearly, numerous and other arrangements can be readily devised by those skilled in the art without departing from the scope of the invention.

## Claims

1. An encrypting apparatus comprising a digest part using a SHA-2 algorithm of which a basic unit of operation is 32*Y (Y=1 or 2) bits,
the digest part including
a shift register including a series of plural registers; and
a predetermined number of adders configured to perform an addition operation based on data stored in the shift register,
wherein the shift register includes a (32*Y)/X-bit register, where X=2^{k} (k is an integer such that 1≤k≤4 when Y=1 and 1≤k≤5 when Y=2),
wherein each of the adders has a data width of (32*Y)/X bits, and is configured to perform the addition operation in each cycle in which the data stored in the shift register is shifted between the registers with the data width of (32*Y)/X bits.

2. The encrypting apparatus according to claim 1, further comprising a logic operation circuit configured to perform a ∑ function operation on the data inputted with the data width of 32*Y bits,
wherein a first interface unit is disposed on an input side of the logic operation circuit,
wherein the first interface unit is configured to match the data width of (32*Y)/X bits with the 32*Y bits.

3. The encrypting apparatus according to claim 2, wherein the first interface unit is configured to acquire, from the shift register, 32*Y-bit data which is shifted between a predetermined number X of successive registers and a number (X-1) of registers following the X registers with the data width of (32*Y)/X bits in each cycle, and configured to output the 32*Y-bit data.

4. The encrypting apparatus according to claim 3, further comprising a second interface unit disposed on an output side of the logic operation circuit,
wherein the second interface unit is configured to match the bit width of the 32*Y-bit data outputted from the logic operation circuit with the (32*Y)/X bits,
wherein the second interface unit is configured to acquire, from the 32*Y-bit data outputted from the logic operation circuit, predetermined (32*Y)/X bit data corresponding to the particular cycle in each cycle, and configured to output the predetermined (32*Y)/X bit data to one of the adders.

5. The encrypting apparatus according to claim 2, wherein the first interface unit is configured to acquire, from the shift register, 32*Y-bit data which is shifted between a predetermined number X of successive registers and a number (X-1) of registers following the X registers with the data width of (32*Y)/X bits in each cycle, and configured to output the 32*Y-bit data to one of the adders while cyclically shifting the 32*Y-bit data with the data width of (32*Y)/X bits in each cycle.

6. The encrypting apparatus according to claim 5, further comprising a second interface unit disposed on an output side of the logic operation circuit and configured to match the bit width of the 32*Y-bit data outputted from the logic operation circuit with the (32*Y)/X bits,
wherein the second interface unit is configured to output the (32*Y)/X bit data outputted from a predetermined output terminal of the logic operation circuit into one of the adders.

7. The encrypting apparatus according to claim 5, wherein the logic operation circuit includes three cyclic shift operating elements configured to perform the ∑ function operation, and an XOR operating element,
wherein the (32*Y)/X bit data outputted from a predetermined output terminal of each of the cyclic shift operating elements is inputted into the XOR operating element,
wherein the (32*Y)/X bit data outputted from the XOR operating element is outputted to one of the adders.
